# EUROPÄISCHE PATENTSCHRIFT

(11) **EP 3 387 392 B1**
(45) Veröffentlichungstag und Bekanntmachung des Hinweises auf die Patenterteilung: **24.02.2021**
(21) Anmeldenummer: 16784842.3
(22) Anmeldetag: 17.10.2016
(51) Int. Cl.: G01F 23/292, A47L 15/42, D06F 39/02, D06F 25/00

(54) **KOMBINIERTES OPTISCHES BEHÄLTER- UND FÜLLSTANDSERKENNUNGSSYSTEM**
COMBINED OPTICAL CONTAINER AND FILLING LEVEL DETECTION SYSTEM
SYSTÈME OPTIQUE COMBINÉ DE DÉTECTION DE RÉCIPIENT ET DE NIVEAU

(30) Priorität: 11.12.2015 DE 102015224946
(43) Veröffentlichungstag der Anmeldung: 17.10.2018
(73) Patentinhaber: BSH Hausgeräte GmbH, 81739 München (DE)
(72) Erfinder: EGLMEIER, Hans, 10587 Berlin (DE)
(86) Internationale Anmeldenummer: PCT/EP2016/074857
(87) Internationale Veröffentlichungsnummer: WO 2017/097477

(56) Entgegenhaltungen:
- WO-A1-2011/015934
- DE-A1- 2 726 082
- DE-A1- 3 240 047
- FR-A1- 2 653 555
- FR-A1- 2 690 740
- FR-A5- 2 057 467
- US-A1- 2013 175 292

## Beschreibung

Die Erfindung betrifft ein kombiniertes optisches Behälter- und Füllstandserkennungssystem, mit wenigstens einem herausnehmbaren Behälter, der mehrere Abteile mit jeweils einem Innenraum zur Aufnahme fließ- oder rieselfähiger Medien aufweist.

Die Offenlegungsschrift WO 2011/015934 A1 zeigt einen optischen Sensor zum Erfassen eines Füllstandes eines Behälters.

Die Offenlegungsschrift DE 32 40 047 A1 zeigt eine Vorrichtung in Wasch- oder Spülmaschinen mit Vorratsbehältern.

Die Offenlegungsschrift FR 2 653 555 A1 zeigt eine Vorrichtung zum optischen Messen eines Füllstandes eines Behälters.

Die Offenlegungsschrift DE 27 26 082 A1 zeigt eine optische Flüssigkeitsstandanzeige. Die Offenlegungsschrift FR 2 057 467 A5 zeigt eine Flüssigkeitsstandanzeige.

Aus der DE 10 2010 038 668 A1 ist Waschgerät mit einem optischen Füllstandssensor für einen Flüssigkeitsbehälter gezeigt. Der Füllstandssensor weist einen Lichtleiter auf der teilweise von der zu messenden Flüssigkeit benetzt werden kann. Je nach Grad der Benetzung wird ein Teil des Lichts aus dem Lichtleiter ausgekoppelt. Der verbleibende Anteil kann erfaßt und zur Bestimmung des Füllstandes, der Trübung der Flüssigkeit oder anderer Parameter ausgewertet werden.

Die Erfindung schafft ein kombiniertes optisches Behälter- und Füllstandserkennungssystem, das in einfacher Weise die Möglichkeit zur Füllstandsmessung und zur Erkennung des Behälters bietet.

Dies wird erreicht durch ein System mit den Merkmalen des Anspruchs 1.

Mit einem solchen System kann sowohl ein Füllstand eines fließ- oder rieselfähigen Mediums in dem Behälter, als auch der Behälter selbst erkannt werden. Das System hat den Vorteil, daß an dem Behälter selbst keine aktiven Meßeinrichtungen vorhanden sein müssen, d.h. es sind keine elektrischen Verbindungen von der Behälteraufnahme zum Behälter erforderlich. Damit kann der Behälter ohne weiteres entnommen werden, um ihn beispielsweise mit einem Medium zu befüllen, zu entleeren oder gegen einen andern, gleichartigen Behälter auszutauschen der z.B. mit einem anderen Medium befüllt ist. Das System kann vorteilhafterweise Bestandteil eines Gerätes oder einer Vorrichtung sein, die das Medium als Betriebsstoff benötigt, verarbeitet oder bei der das Medium im Betrieb abfällt. Mit dem System ist es möglich, zum einen den Füllstand des Mediums im Behälter zu überwachen. Dadurch kann das System oder die Vorrichtung, in der das System eingebaut ist, beispielsweise erkennen, wenn der Pegel des Mediums unter ein Mindestmaß gefallen ist, also keine ausreichende Menge des Mediums für den Betrieb der Vorrichtung mehr vorhanden ist. Oder das System kann, wenn das Medium ein Produkt der Vorrichtung ist, erkennen, wenn ein maximaler Pegel überschritten ist und der Behälter geleert werden muß. Zum anderen kann mit demselben System erkannt werden, ob ein Behälter vorhanden, und/oder richtig in der Behälteraufnahme eingesetzt ist. Damit kann der Benutzer eines Gerätes oder einer Vorrichtung gewarnt oder der Betrieb der Vorrichtung unterbunden werden, wenn sich nicht ordnungsgemäß ein Behälter in der Behälteraufnahme befindet und die Gefahr besteht, daß das Medium aus der Vorrichtung austritt oder die Vorrichtung ohne das Medium Schaden nimmt. Zur optischen Ankopplung der Tauchkörper an die Reflexionslichtschranken ist jeweils an einem Ende vorteilhaft eine Lichtankopplungsfläche vorgesehen, die an einer Oberfläche des Behälters liegt und in einer bestimmten Position des Behälters in der Behälteraufnahme einer Lichtaustrittsfläche der Reflexlichtschranke gegenüberliegt. Die Lichtankopplungsfläche ist so angeordnet, daß sie den Strahlengang des Lichts, aus der Reflexlichtschranke in den Lichtleiter des Tauchkörpers und gegebenenfalls zurück in die Reflexlichtschranke, wenig behindert. Am anderen Ende des Tauchkörpers, dem Sondenende ist eine Benetzungsfläche ausgebildet sein, die ihr Reflexionsverhalten ändert, wenn sie von dem Medium benetzt ist. Ist die Benetzungsfläche mit dem Medium benetzt, wird ein erheblicher Anteil des Lichts in dem Medium absorbiert und nicht mehr zurückreflektiert (frustrierte Totalreflektion).

Gemäß einer vorteilhaften Ausführungsform der Erfindung ist am Behälter ein optisch erfaßbarer Code, insbesondere ein Barcode angebracht. Damit ist das System in der Lage, Informationen über den Behälter einzulesen. Diese Informationen können beispielsweise dazu dienen, den Inhalt des Behälters oder den Behälter selbst zu identifizieren. So kann dem System mitgeteilt werden, welches Medium sich im Behälter befindet oder wenn verschieden Behälter zur Verfügung stehen, die ausgetauscht werden können, kann das System erfassen, welcher der Behälter sich in der Aufnahme befindet. Über zusätzliche Informationswege, beispielsweise über eine drahtlose Kommunikation mit einem Mobilgerät oder über eine Internetverbindung kann die Identifikation des Behälters mit dem Informationen über dessen Inhalt verknüpft werden, sodaß mit der Information über die Identität des Behälters auch Information über den Inhalt zur Verfügung steht. Des weiteren kann der Code auch Informationen zu speziellen Parametern der Beschaffenheit des Inhalts enthalten, etwa bei Betriebsstoffen die Zusammensetzung, physikalische Parameter, Dosierhinweise et cetera. Der Code kann auch eine Verknüpfung zu einer Adresse enthalten unter der diese Informationen zugänglich sind, sodaß sich das System die Informationen beispielsweise aus dem Internet selbst beschafft, z.B. besondere Betriebsprogramme für die Vorrichtung oder das Gerät.

Besonders vorteilhaft ist es, wenn am Behälter Tauchkörper unterschiedlicher Länge vorgesehen sind. Dies erlaubt es dem System, mehrere Füllstände zu erfassen. Für jeden diskret zu erfassenden Füllstand kann ein Tauchkörper vorhanden sein, dessen Sondenende bei Erreichen eines Füllstandes, der der Länge, bzw. der Höhe des Behälters abzüglich der Länge des Tauchkörpers entspricht vom Medium benetzt wird und der deshalb ein anderes Reflexionsverhalten zeigt.

Gemäß einer vorteilhaften Weiterbildung kann ein einzelner Tauchkörper vorhanden sein, der aber mehrere, in unterschiedlichem Abstand von einer oder mehreren Lichtankopplungsflächen angeordnete Benetzungsflächen aufweist, die bei unterschiedlichen Füllständen des Mediums im Behälter benetzt sind. Das Reflexionsverhalten des Tauchkörpers ändert sich somit je nach Erreichen unterschiedlicher Füllstände.

In einer weiteren vorteilhaften Weiterbildung ist ein Tauchkörper mit Benetzungsfläche vorgesehen, die das Reflexionsverhalten des Tauchkörpers abhängig vom Benetzungsgrad, d.h. vom Anteil der benetzten Fläche, kontinuierlich verändert. Damit kann der Füllstand kontinuierlich als Funktion der reflektierten Lichtintensität von der Reflexlichtschranke erfaßt werden.

Erfindungsgemäß weist der Behälter mehrere Abteile mit jeweils einem Innenraum und separaten Tauchkörpern auf. Auf diese Weise können mit einem Behälter unterschiedliche Medien bereitgestellt werden, deren Füllstände jeweils erfassbar sind.

In einer vorteilhaften Weiterbildung ist am Behälter für jedes Abteil ein separater Code angebracht. So kann für jedes Abteil separat eine Information bereitgestellt werden, die von dem System erfaßbar ist, beispielsweise die Information über den Inhalt, also das Medium in dem Abteil. Der Behälter kann so vom Benutzer je nach Bedarf mit verschiedenen Medien befüllt werden. Die Information über das jeweilige Medium kann entweder direkt im jeweiligen Code enthalten sein. beispielsweise in Form eines Codeaufklebers, der vom Lieferanten des Mediums bereitgestellt und vom Benutzer beim Befüllen eines Abteils auf den Behälter aufgebracht wird. Oder jedem Abteil ist ein vorgegebener Code zugeordnet, z.B. als Prägung auf dem Deckel des Behälters, und die Information über das Medium wird vom Benutzer beim Befüllen eines Abteils dem jeweiligen Code des Abteils zugeordnet, indem er diese Information bereitstellt. Dazu kann beispielsweise eine Eingabemöglichkeit an dem Gerät, in dem das System eingebaut ist, oder eine Anwendung auf einem Mobilgerät, das mit dem Gerät in Verbindung steht, dienen. Die Information kann schon von dem Hersteller des Mediums in maschinenlesbarer Form, z.B. als aufgedruckter Produktcode auf der Verpackung bereitgestellt werden. Der Produktcode kann dann von einer Kamera des Mobilgerätes oder von einem Scanner im Gerät erfaßt und vom System der Abteilidentifikation zugeordnet werden. Alternativ kann der Produktcode auf der Verpackung auch ein Link auf eine Internetseite mit der Produktinformation darstellen.

Die Erfindung schafft weiterhin ein Haushaltsgerät, insbesondere Haushaltsgerät eine Waschmaschine, ein Wäschetrockner oder ein Waschtrockner, mit einem oben beschriebenen kombinierten Behälter- und Füllstandserkennungssystem.

Weitere Vorteile und Merkmale der Erfindung ergeben sich aus der nachfolgenden Beschreibung unter Bezugnahme auf die beigefügten Zeichnungen. In den Zeichnungen zeigt:
- Fig. 1.: einen schematischen Querschnitt durch ein kombiniertes Behälter- und Füllstandserkennungssystem gemäß einer ersten Ausführungsform der Erfindung in einem ersten Zustand,
- Fig. 2.: einen schematischen Querschnitt durch das System aus Figur 1 in einem zweiten Zustand,
- Fig. 3.: einen schematischen Querschnitt durch das System aus Figur 1 in einem dritten Zustand,
- Fig. 4.: eine schematische Ansicht einer Waschmaschine mit einem kombiniertes Behälter- und Füllstandserkennungssystem gemäß der Erfindung,
- Fig. 5.: eine Aufsicht auf einen Behälter eines kombinierten Behälter- und Füllstandserkennungssystem gemäß einer zweiten Ausführungsform der Erfindung,
- Fig. 6.: a) den Barcode des Behälters aus Figur 5,
b) ein Signal einer Reflexlichtschranke des erfindungsgemäßen kombiniertes Behälter- und Füllstandserkennungssystem beim Erfassen des barcodes aus Figur 6a),
- Fig. 7.: eine Aufsicht auf einen Behälter eines kombinierten Behälter- und Füllstandserkennungssystem gemäß der Erfindung, und
- Fig. 8.: einen schematischen Querschnitt durch ein kombiniertes Behälter- und Füllstandserkennungssystem gemäß einer dritten Ausführungsform der Erfindung.

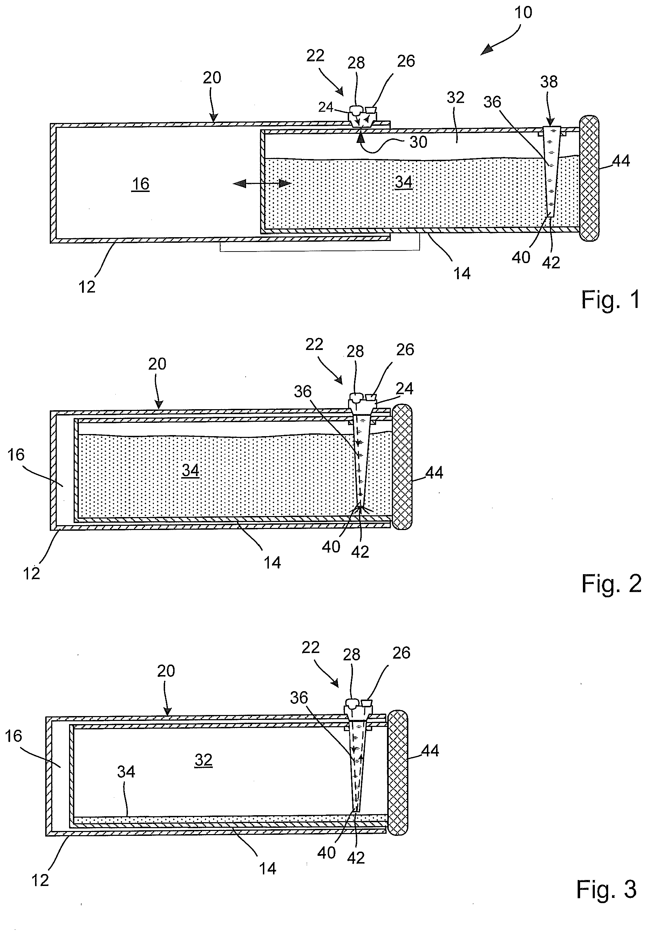

Das in Figur 1 in einem Schnitt schematisch dargestellte Behälter- und Füllstandserkennungssystem 10 weist eine Behälteraufnahme 12 und einen Behälter 14 auf. In der Behälteraufnahme 12 ist ein Schacht 16 zur Aufnahme des Behälters 14 ausgebildet. Der Schacht 16 weist einen dem Behälter 14 entsprechenden Querschnitt auf, sodaß der Behälter 14 in den Schacht 16 eingeschoben oder aus diesem herausgezogen werden kann, wie durch die Pfeile angedeutet ist. In einer oberen Wand 20 der Behälteraufnahme 12 ist eine Reflexlichtschranke 22 vorgesehen. Die Reflexlichtschranke 22 weist in dieser Ausführungsform einen Lichtleitkörper 24 auf, der durch die obere Wand 20 in den Schacht 16 ragt. An dem Lichtleitkörper 24 sind ein Empfänger 26 und ein Sender 28 angebracht, die optisch an den Lichtleitkörper 24 angekoppelt sind. Der Lichtleitkörper 24 ist außerdem mit einer Lichtaustrittsfläche 30 versehen, die in den Schacht 16 weist.

Der Behälter 14 ist in Form eines Hohlkörpers ausgestaltet gebildet, der einen Innenraum 32 bildet. Der Innenraum 32 des Behälters 14 ist mit einem fließ- oder rieselfähigen Medium 34 gefüllt. An der Oberseite des Behälters 14 ragt ein Tauchkörper 36 durch die Behälterwand in den Innenraum 32. Der Tauchkörper 36 ist in dieser Ausführungsform in Form eines Pyramidenstumpfes aus einem lichtleitenden Material ausgebildet. Der Tauchkörper 36 ist zur Oberseite des Behälters 14 hin mit einer Lichtankopplungsfläche 38 versehen. An einem gegenüberliegenden Sondenende 40, welches zum Boden des Behälters 14 weist, ist eine Benetzungsfläche 42 ausgebildet. Der Tauchkörper 36 ragt so tief in den Innenraum 32 hinein, daß die Benetzungsfläche 42 gerade nicht mehr in das Medium 16 taucht, wenn das Medium 16 einen kritischen Füllstand unterschreitet.

Der Behälter 14 kann, wie oben bereits erwähnt, in dem Schacht 16 verschoben werden, wobei der Behälter 14 wie in den Figuren 2 und 3 dargestellt, eine Endlage einnehmen kann in der er vollständig in den Schacht 16 eingeschoben ist. In dieser Enlage ist der Behälter 14 so positioniert, daß sich die Lichtaustrittsfläche 30 der Reflexlichtschranke 22 im wesentlichen mit der Lichtankopplungsfläche 38 des Tauchkörpers 36 überdeckt.

Der Behälter 14 kann auch vollständig aus der Behälteraufnahme 12 entfernt werden, um ihn zu befüllen, zu entleeren, zu reinigen oder gegen einen gleichartigen, z.B. mit einem anderen Medium 16 gefüllten auszutauschen. Dazu kann der Behälter 14 Befüll- und Entleerungsöffnungen aufweisen oder die Behälterwand an der Oberseite kann als aufklappbarer oder abnehmbarer Deckel ausgebildet sein.

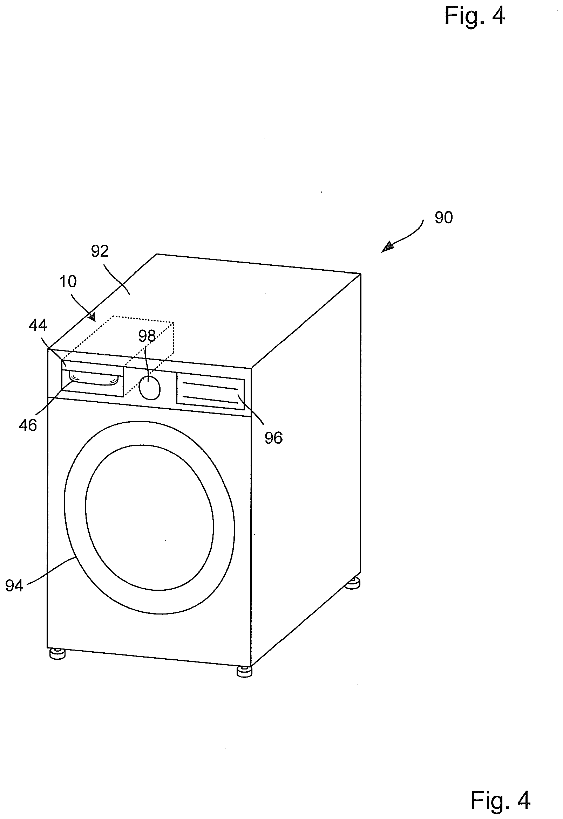

In der hier beschriebenen Ausführungsform ist das Behälter- und Füllstandserkennungssystem 10 beispielhaft als Bestandteil einer Waschmaschine 90 ausgeführt. Die Waschmaschine ist schematisch in Figur 4 dargestellt, mit einem Gehäuse 92, einer Tür 94 und einer Bedienblende mit Anzeigen 96 und Bedienelementen 98. Der Behälter 14 bildet dabei einen Vorratsbehälter für ein automatisches Dosiersystem, der als Medium ein flüssiges Waschmittel enthält. Der Behälter 14 ist im Schacht 18 der Behälteraufnahme 12 untergebracht, die im Blendenbereich der Waschmaschine 90 untergebracht ist. Aus dem Behälter 14 kann das automatische Dosiersystem (nicht dargestellt) Waschmittel entnehmen und zum Waschen der Wäsche in den Behandlungsraum dosieren. An einer Stirnseite des Behälters 14 ist eine Blende 44 angebracht, in welcher eine Griffmulde 46 ausgebildet ist.

Im folgenden ist die Funktion des Behälter- und Füllstandserkennungssystems 10 beschrieben.

In Figur 2 ist dargestellt, daß sich der Behälter 14 in seiner Endlage, vollständig im Schacht 16 der Behälteraufnahme 12 eingeschoben, befindet. In dieser Endlage kann kann die Waschmaschine ordnungsgemäß betrieben werden, d.h. das Dosiersystem kann aus dem Behälter 14 bei Bedarf das Waschmittel 16, mittels einer hier nicht dargestellten Einrichtung entnehmen.

In der Endlage befindet sich die Lichtaustrittsfläche 30 der Reflexlichtschranke 22 im wesentlichen gegenüber der Lichtankopplungsfläche 38 des Tauchkörpers 36, sodaß der Lichtleitkörper 24 der Reflexlichtschranke 22 optisch an den lichtleitende Pyramidenstumpf des Tauchkörpers 36 angekoppelt ist.

Solange der Innenraum 32 des Behälters 14 ausreichend mit Waschmittel gefüllt ist, wie z.B. in Figur 2, taucht der Tauchkörper 36 mit seinem Sondenende 40 in das Medium 34 ein, sodaß die Benetzungsfläche 42 von dem Medium 34 benetzt ist.

In dieser Lage wird von dem Sender 28 ausgesandtes Licht durch den Lichtleiter 24 geleitet. Infolge der optischen Ankopplung zwischen der Lichtaustrittsfläche 30 und der Lichtankopplungsfläche 38 wird das Licht (in Figur 2 durch die gestrichelte Linie schematisch angedeutet, in den Tauchkörper geleitet. Da das Sondenende 40 von dem Medium 34 benetzt ist kann das Licht an der Benetzungsfläche 42 austreten und wird in das Medium 34 gestreut und nicht mehr zurückreflektiert (frustrierte Totalreflektion).

Sinkt der Pegel des Mediums 34 im Behälter 14 wie in Figur 3 dargestellt, so weit, daß das Sondenende 40 nicht mehr in das Medium reicht und die Benetzungsfläche 42 nicht mehr benetzt ist, dann ist die Benetzungsfläche 42 des Lichtleiters gut reflektierend (bevorzugt Totalreflektion über Retroreflektor), das Licht wird an der Benetzungsfläche weitgehend reflektiert und über die optische Ankopplung in die Reflexlichtschranke 22 zurückgeleitet. Diese Änderung der Lichtausbreitung kann im Empfänger 26 registriert und von einer Steuerung der Waschmaschine bzw. der Dosiereinrichtung ausgewertet werden. Auf diese Weise kann erkannt werden, ob der Füllstand des Mediums 34 im Behälter 14 für eine einwandfreie Funktion noch ausreichend ist. Die Endlage des Behälters 14 entspricht somit in dieser Ausführungsform auch einer Meßposition.

In Figur 1 ist der Behälter 14 nicht vollständig in den Schacht eingeschoben, d.h. er befindet sich nicht in der für einen ordnungsgemäßen Betrieb erforderlichen Endlage. In diesem Fall, aber auch wenn der Behälter vollständig aus dem Schacht entfernt wurde, ist die optische Ankopplung des Tauchkörpers 36 an die Reflexlichtschranke 22 nicht mehr in der Weise wie in den Figuren 2 und 3 gegeben. Das bedeutet, daß das Reflexionsverhalten in der Lichtschranke 22 ebenfalls geändert ist. Damit ist auch dieser Zustand über die Reflexlichtschranke 22 registrierbar und kann in der Steuerung der Waschmaschine ausgewertet werden, um z.B. den Betrieb zu unterbinden. Die Erkennung dieser Zustände kann dabei sowohl statisch, aufgrund der fehlenden Ankopplung, wie auch dynamisch, über die Auswertung der Bewegung der Oberseite des Behälters 14 unter der Lichtschranke 22, erfolgen. Um das Fehlen des Behälters 14 besser von einem nur teilweise eingeschobenen Behälter unterscheiden zu können, kann vorteilhaft auf der Oberseite des Behälters eine reflektierende Schicht oder eine Markierung angebracht sein, die ein bestimmtes Relflexionsverhalten der Lichtschranke 22 hervorruft.

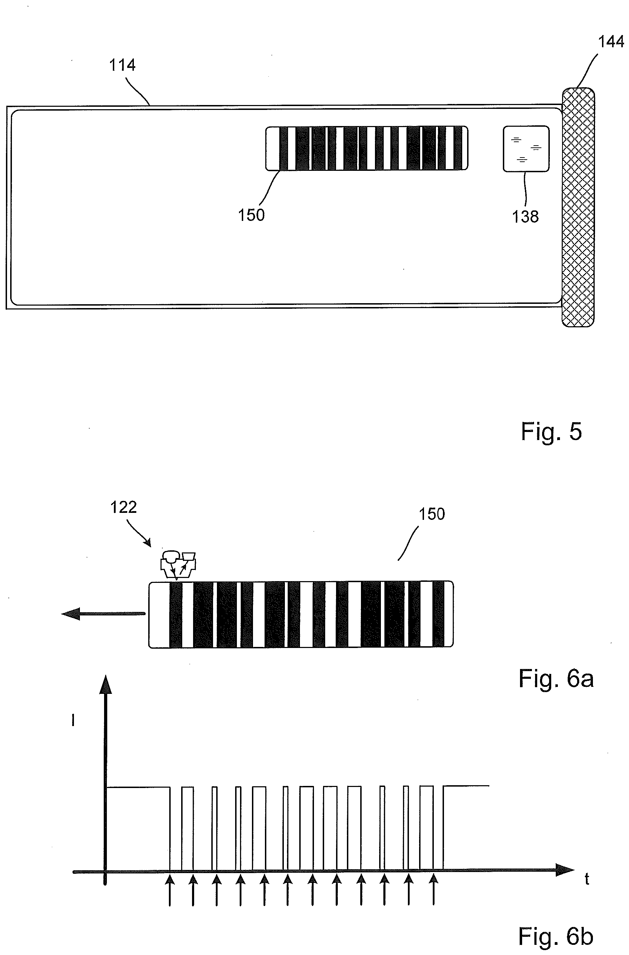

Ein Behälter- und Füllstandserkennungssystem gemäß einer weiterentwickelte Ausführungsform wird im folgenden anhand Figur 5 beschrieben, in welcher für bereits bekannte Bestandteile um 100 erhöhte Bezugszeichen Verwendung finden.

In Figur 5 ist in einer Ansicht auf die Oberseite ein Behälter 114 eines Behälter- und Füllstandserkennungssystems dargestellt. Im Vergleich zu dem vorstehend beschriebenen eines Behälter- und Füllstandserkennungssystem ist hier der Behälter 114 an der Oberseite mit einem Barcode 150 versehen.

Der Barcode 150 ist so angeordnet, daß die Codebalken quer zur Einschieberichtung des Behälters liegen. Somit wird der Barcode wird beim Einschieben oder Herausziehen des Behälters 114 aus dem Schacht der Behälteraufnahme 112 von der Reflexlichtschranke 22 erfaßt. In dem Barcode 50 sind Informationen über das in dem Behälter 114 befindliche Medium codiert. Die Steuerung der Waschmaschine erhält dadurch beim Einschieben des Behälters 114 die Information über das Waschmittel welches nunmehr in dem Behälter zur Verfügung steht.

Besonders vorteilhaft ist der Barcode so ausgebildet, daß er auch dann sicher erfaßt werden kann, wenn der Behälter nicht mit absolut konstanter Geschwindigkeit, etwa manuell eingeschoben wird.

Dazu ist vorgesehen, in Figur 6a beispielhaft ein Barcode dargestellt, der mit äquidistanten hell/dunkel Flanken versehen ist. In der Darstellung des entsprechenden Signals I der Reflexlichtschranke über der Zeit t in Figur 6b sind diese Flanken durch die Pfeile gekennzeichnet. Der zu erwartende Zeitpunkt eines hell/dunkel-Wechsels läßt sich durch eine Interpolation über die Zeitpunkte benachbarter hell/dunkel-Wechsel hinreichend genau bestimmen, auch wenn sich die Geschwindigkeit beim Einschieben ändert.

Vorteilhafterweise kann eine Einrichtung vorgesehen sein, die für eine weitgehend konstante Geschwindigkeit beim Einschieben des Behälters gewährleistet. Dies kann beispielsweise eine gedämpfte Führung oder eine motorbetriebene Einzugsvorrichtung sein.

Außerdem können weitere Maßnahmen vorgesehen sein, die Zuverlässigkeit der Barcodeerkennung zu erhöhen. Beispielsweise lassen sich die Informationen zusätzlich mit Redundanzen fehlererkenn- und -korrigierbar gestalten. Eine während des Lesens stattfindende mögliche Umkehrung der Bewegungsrichtung läßt sich durch Zählen der Gesamtimpulse auf Plausibilität prüfen und ggf. korrigieren oder zur Aufforderung an den Benutzer verwenden, nochmal zu scannen. Vorteilhaft können auch zusätzlich oder alternativ weitere Informationen von der Lichtschranke erfaßt werden. Bevorzugt kann die aktuelle Position des Behälters beim Schieben erfaßt werden, etwa mittels eines Längencodes auf der Oberfläche oder durch bekannte Wegmessverfahren z.B. von Computermäusen. Mit dieser Information lassen sich die Lichtschrankendaten präziser auswerten, d.h. den zugehörigen Ereignissen (Barcode auf dem Behälter lesen, Position des Lichtleiters zur Füllstandsdetektion, Behälter ganz eingeschoben bzw. überhaupt vorhanden, Behälter wurde zwischenzeitlich herausgeschoben oder entnommen, etc.) zuordnen.

In einer Variante kann der Barcode als Aufkleber vom Hersteller dem Waschmittel beigegeben sein. Der Benutzer der Waschmaschine kann den Aufkleber mit dem Barcode dann, wenn er das Waschmittel in den Behälter füllt, auf der Oberseite des Behälters an vorgesehener Stelle anbringen. Besitzt der Benutzer mehrere Behälter, so kann er diese mit unterschiedlichen Waschmitteln, oder anderen Behandlungsmedien, wie Weichspüler oder Pflege- und Ausrüstungsmitteln befüllen und je nach Bedarf den gewünschten Behälter in die Waschmaschine einsetzen, wobei diese anhand des Barcodes erkennt, welches Medium derzeit verfügbar ist.

Alternativ kann der Barcode auch dem Behälter fest zugeordnet sein, z.B. eingeprägt oder aufgedruckt. In diesem Fall gibt der Benutzer der Waschmaschine die Information über das Medium auf anderem Wege ein, z.B. über Eingabeelemente der Waschmaschine oder über ein mobiles Gerät, etwa ein Smartphone, welches mit der Waschmaschine kommuniziert. Besonders vorteilhaft kann auf der Verpackung des Mediums ein Produktcode vorgesehen sein, der mit dem Smartphone erfaßt werden kann, sodaß dieses die Produktinformationen an die Waschmaschine weitergibt.

In der Waschmaschine wird vorteilhafterweise die Zuordnung der Produktionformation zu dem Behältercode gespeichert, sodaß diese nach jedem Behälterwechsel zur Verfügung steht.

Alternativ kann vorgesehen sein, daß der Behälter bereits vom Hersteller des Mediums befüllt und mit einem Code versehen ist, der die Produktionformationen enthält. In einer vorteilhaften Variante kann die Verkaufsverpackung des Mediums als Wechselkartusche ausgebildet sein, die in den Behälter so eingesetzt wird, daß z.B. der Tauchkörper eine Verschlußfolie durchsticht.

Alternativ kann der Behälter selbst komplett mit dem Tauchkörper die Verkaufsverpackung für das Medium im Einweg- oder Mehrwegsystem bilden.

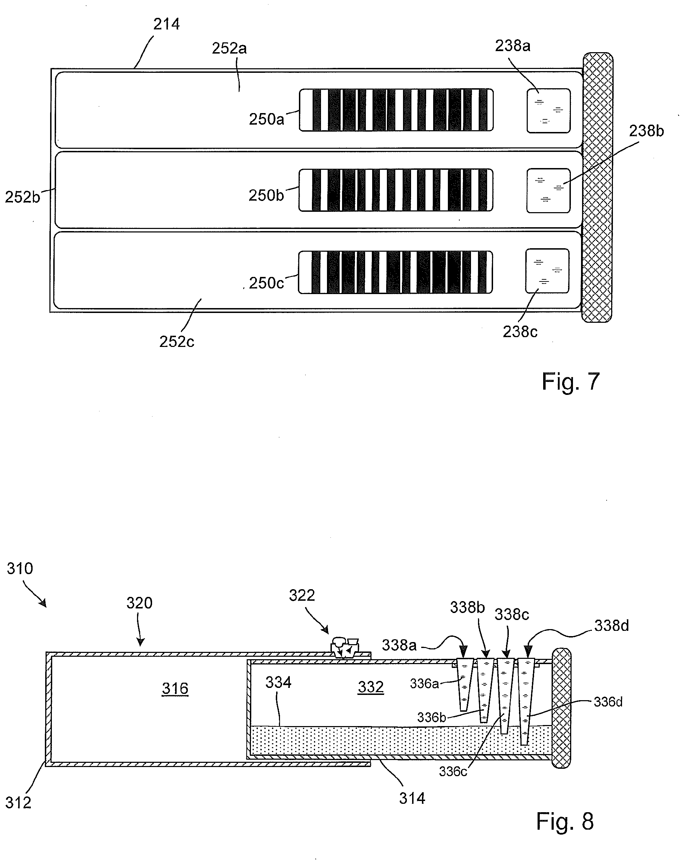

Ein Behälter- und Füllstandserkennungssystem gemäß der Erfindung wird im folgenden anhand Figur 7 beschrieben, in welcher für bereits bekannte Bestandteile um 200 erhöhte Bezugszeichen Verwendung finden.

In Figur ist in einer Ansicht die Oberseite eines Behälter 214 zu sehen, der drei Abteile 252a, 252b, 252c aufweist, die jeweils Medien aufnehmen können. Damit kann beispielsweise ein Behälter mit mehreren unterschiedlichen Wäschepflegemitteln bereitgestellt werden. In jedem der Abteile 252a, 252b, 252c ist ein Tauchkörper 236a, 236b, 236c und auf der Oberseite eines jeden der Abteile ein Barcode 250a, 250b, 250c vorgesehen. Dementsprechend ist die Behälteraufnahme mit drei Reflexlichtschranken ausgestattet, sodaß beim Einschieben des Behälters alle drei Barcodes 250a, 250b, 250c und in der Meßposition der Endlage die Füllstände aller drei Abteile 252a, 252b, 252c gleichzeitig erfaßt werden können. In einer Variante können anstelle eines Behälters mit mehreren Abteilen, mehrere Behälter vorgesehen sein, die gleichzeitig in die Behälteraufnahme untergebracht werden können.

Ein Behälter- und Füllstandserkennungssystem gemäß noch einer weiteren Ausführungsform wird im folgenden anhand Figur 8 beschrieben, in welcher für bereits bekannte Bestandteile um 300 erhöhte Bezugszeichen Verwendung finden

Das Behälter- und Füllstandserkennungssystem 310 weist in dieser Ausführungsform einen Behälter 314 auf der nicht nur mit einem, sondern mit mehreren, hier vier Tauchkörpern 336a, 336b, 336c, 336d ausgestattet ist. Die Lichtankopplungsflächen 338a, 338b, 338c, 338d der Tauchkörper liegen in einer Reihe auf der Oberfläche des Behälters 314 und zwar in der Einschieberichtung hintereinander, sodaß sie nacheinander in verschiedenen Meßpositionen an die Austrittsfläche der Reflexlichtschranke ankoppeln. Je nach Höhe des Füllstands des Mediums 334 wird das Licht der Reflexlichtschranke 322 in den nicht benetzten Tauchkörpern 336a, 336b reflektiert oder in den eintauchenden Tauchkörpern 338c, 338d am Sondenende 340c, 340d in das Medium 334 gestreut.

Auf diese Weise kann beim Einschieben des Behälters 314 der Füllstand in Stufen entsprechend der Anzahl der Tauchkörper erfaßt werden.

Die Tauchkörper können wie in Figur 8 dargestellt als einzelne Lichtleiter ausgebildet sein. Alternativ kann auch ein Tauchkörper als Lichtleiterkamm ausgebildet sein, in dem Benetzungsflächen in unterschiedlicher Höhe ausgebildet sind die nacheinander von der Reflexlichtschranke erfaßt werden.

Bevorzugt sind zur Unterscheidung der Lichtankopplungsflächen zwischen den Positionen für die unterschiedlichen Füllstandshöhen Referenzmarken angebracht, die etwa als definierte hell/dunkel-Wechsel von der Reflexlichtschranke erfaßt werden. In der zuvor beschreibenen Ausführungsform sind diese Referenzmarken durch die Abstände zwischen den einzelnen Lichtankopplungsflächen 338a, 338b, 338c, 338d der separaten Tauchkörper 336a, 336b, 336c, 336d bereits gegeben.

Die zu erfassenden Füllstände müssen nicht unbedingt äquidistant ausgebildet sein, sondern können bevorzugt sogar in einer logarithmischen Stufung mit höherer Auflösung bei niedrigen Füllständen angeordnet sein.

Bevorzugt sind die Lichtankopplungsflächen 338a, 338b, 338c, 338d so angeordnet, daß in der Endlage des Behälters, also nach dem kompletten Einschieben in den Schacht 316, eine der Benetzungsflächen an die Reflexlichtschranke 322 angekoppelt bleibt, um im Betrieb eine kontinuierliche Überwachung eines speziellen Füllstands, insb. den niedrigsten Füllstand zu ermöglichen.

Der Füllstand kann vorteilhaft nicht in Stufen, sondern kontinuierlich erfaßt werden, wenn der Tauchkörper so ausgebildet ist, daß die reflektierte Intensität des Lichts von der Eintauchtiefe des Tauchkörpers in das Medium abhängt.

Die Ausführungsformen des Behälter- und Füllstandserkennungssystems sind nicht auf die in den oben beschriebenen Beispielen aufgeführten Ausgestaltungen beschränkt. In einer alternativen Ausführungsform kann die Reflexlichtschranke beispielsweise statt an der obenliegenden Wand der Behälteraufnahme auch an anderer Stelle, z.B. an der unteren Wand angebracht sein, sodaß sie zur Unterseite des Behälters weist. Der oder die Tauchkörper, sowie gegebenenfalls der oder die Codes sind dann auf der Unterseite des Behälters angebracht. Die Sondenenden sind dann bei Unterschreiten eines bestimmten Füllstandes des Mediums nicht mehr benetzt, sodaß sich in diesem Fall das Reflexionsverhalten des entsprechenden Tauchkörpers ändert. In einer vorteilhaften Weiterbildung ist die Benetzungsfläche am Sondenende dann konisch ausgebildet, sodaß das Medium von der Benetzungsfläche schnell abläuft bzw. abrieselt, wenn das Sondenende aus dem Medium auftaucht.

In einer weiteren Ausführungsform kann das Haushaltsgerät ein Wäschetrockner sein, bei dem ein Kondensatbehälter als Bestandteil eines Behälter- und Füllstandserkennungssystems ausgestaltet ist.

In einem alternativen Behälter- und Füllstandserkennungssystem kann anstelle einer Reflexlichtschranke zur optischen Füllstandserfassung und Behältererkennung ein akustisches Erfassungssystem eingesetzt werden, welches etwa mittels Ultraschall das Vorhandensein des Behälters und den Füllstand im Behälter durch eine Öffnung messen und kann. Mittels eines solchen Ultraschallerfassungssystems kann auch ein Code auf der Behälteroberfläche erfaßt werden, der in Form einer Struktur aufgebracht ist. Alternativ sind auch Radarsysteme für die Zwecke des beschriebenen Behälter- und Füllstandserkennungssystems geeignet.

## Patentansprüche

1. Kombiniertes optisches Behälter- und Füllstandserkennungssystem (10), mit
- wenigstens einem herausnehmbaren Behälter (214), der mehrere Abteile (252a, 252b, 252c) mit jeweils einem Innenraum (32) zur Aufnahme fließ- oder rieselfähiger Medien (34) aufweist, und
- wenigstens einer Behälteraufnahme (12) für den Behälter (214),
wobei die Behälteraufnahme (12) mit mehreren Reflexlichtschranken (22) ausgestattet ist und der Behälter (214) mehrere separate Tauchkörper (36) in Form von Lichtleitern aufweist, welche in das Medium (34) ragen, und welche optisch jeweils mit einer der Reflexlichtschranken (22) gekoppelt sind, wenn sich der Behälter in der Behälteraufnahme (12) in einer Messposition befindet,
wobei zur optischen Ankopplung an die Reflexlichtschranken (22) die Tauchkörper (36) jeweils an einem Ende eine Lichtankopplungsfläche aufweisen, die jeweils an einer Oberfläche des Behälters (214) liegt und in einer bestimmten Position des Behälters (214) in der Behälteraufnahme (12) einer Lichtaustrittsfläche der jeweiligen Reflexlichtschranke (22) gegenüberliegt,
wobei am anderen Ende der Tauchkörper (36) jeweils eine Benetzungsfläche ausgebildet ist, die ihr Reflexionsverhalten ändert, wenn sie von dem Medium benetzt ist.

2. Kombiniertes Behälter- und Füllstandserkennungssystem (310) nach Anspruch 1, bei dem am Behälter (114; 214) ein optisch erfaßbarer Code, insbesondere ein Barcode (150; 250a, 250b, 250c) angebracht ist.

3. Kombiniertes Behälter- und Füllstandserkennungssystem (310) nach Anspruch 1 oder 2, bei dem Tauchkörper (336a, 336b, 336c, 336d) unterschiedlicher Länge vorgesehen sind.

4. Kombiniertes Behälter- und Füllstandserkennungssystem nach einem der Ansprüche 1 bis 3, bei dem am Behälter für jedes Abteil ein separater Code (250a, 250b, 250c) angebracht ist.

5. Haushaltsgerät (90) mit einem kombinierten Behälter- und Füllstandserkennungssystem (10) nach einem der Ansprüche 1 bis 4.

6. Haushaltsgerät nach Anspruch 5, wobei das Haushaltsgerät eine Waschmaschine (90), ein Wäschetrockner oder ein Waschtrockner ist.

7. Haushaltsgerät nach Anspruch 5, wobei das Haushaltsgerät eine Waschmaschine (90), oder ein Waschtrockner und der Behälter ein Waschmittelvorratsbehälter ist.

## Claims

1. Combined optical container and filling level detection system (10), with
- at least one removable container (214), which has a number of compartments (252a, 252b, 252c) with in each case an interior (32) for receiving flowable or pourable media (34), and
- at least one container receptacle (12) for the container (214),
wherein the container receptacle (12) is equipped with a number of reflex light barriers (22) and the container (214) has a number of separate immersion trickle filters (36) in the form of light conductors, which project into the medium (34) and which are optically coupled in each case with one of the reflex light barriers (22) if the container in the container receptacle (12) is located in a measuring position,
wherein for optical connection to the reflex light barriers (22), the immersion trickle filters (36) have in each case at one end a light coupling surface, which lies in each case on a surface of the container (214), and in a specific position of the container (214) in the container receptacle (12) faces a light exit surface of the respective reflex light barrier (22),
wherein in each case a wetting surface is embodied at the other end of the immersion trickle filter (36), which changes its reflection behaviour if it is wet by the medium.

2. Combined container and filling level detection system (310) according to claim 1, in which an optically detectable code, in particular a barcode (150; 250a, 250b, 250c) is attached to the container (114; 214).

3. Combined container and filling level detection system (310) according to claim 1 or 2, in which immersion trickle filters (336a, 336b, 336c, 336d) of a different length are provided.

4. Combined container and filling level detection system according to one of claims 1 to 3, in which a separate code (250a, 250b, 250c) is attached to the container for each compartment.

5. Household appliance (90) with a combined container and filling level detection system (10) according to one of claims 1 to 4.

6. Household appliance according to claim 5, wherein the household appliance is a washing machine (90), a tumble dryer or a washer-dryer.

7. Household appliance according to claim 5, wherein the household appliance is a washing machine (90), or a washer-dryer and the container is a detergent storage container.

## Revendications

1. Système optique combiné de détection de contenant et de niveau (10), avec
- au moins un contenant amovible (214), lequel présente plusieurs compartiments (252a, 252b, 252c) avec respectivement un espace intérieur (32) pour l'accueil de matières fluides ou coulantes (34), et
- au moins un logement à contenant (12) pour le contenant (214),
dans lequel le logement à contenant (12) est doté de plusieurs barrières photoélectriques reflex (22) et le contenant (214) présente plusieurs corps immergés distincts (36) sous la forme de barrières photoélectriques, lesquelles font saillie dans la matière (34) et respectivement couplées optiquement avec une des barrières photoélectriques reflex (22), lorsque le contenant se trouve
dans une position de mesure dans le logement à contenant (12), dans lequel pour le couplage optique aux barrières photoélectriques reflex (22), les corps immergés (36) présentent respectivement en une extrémité une surface de couplage lumineux, se trouvant respectivement en une surface du contenant (214) et opposée, dans une position déterminée du contenant (214) dans le logement à contenant (12), à une surface de sortie de lumière de la barrière photoélectrique reflex respective (22), dans lequel une surface de mouillage modifiant son comportement de réflexion lorsque la matière la mouille est formée en l'autre extrémité des corps immergés (36).

2. Système combiné de détection de contenant et de niveau (310) selon la revendication 1, dans lequel un code lisible optiquement, en particulier un code-barres (150 ; 250a, 250b, 250c) est apposé sur le contenant (114 ; 214).

3. Système combiné de détection de contenant et de niveau (310) selon la revendication 1 ou 2, dans lequel des corps immergés (336a, 336b, 336c, 336d) de longueur différente sont prévus.

4. Système combiné de détection de contenant et de niveau selon l'une des revendications 1 à 3, dans lequel un code distinct (250a, 250b, 250c) est apposé sur le contenant pour chaque compartiment.

5. Appareil ménager (90) avec un système combiné de détection de contenant et de niveau (10) selon l'une des revendications 1 à 4.

6. Appareil ménager selon la revendication 5, dans lequel l'appareil ménager est un lave-linge (90), un sèche-linge ou un lave-linge séchant.

7. Appareil ménager selon la revendication 5, dans lequel l'appareil ménager est un lave-linge (90) ou un lave-linge séchant et le contenant est un réservoir à agent de lavage.
